(19) Europäisches Patentamt / European Patent Office / Office européen des brevets

(11) **EP 1 975 858 A1**

(12) **EUROPEAN PATENT APPLICATION**

(43) Date of publication:
**01.10.2008 Bulletin 2008/40**

(51) Int Cl.:
***G06N 3/12*** *(2006.01)* ***G06F 17/50*** *(2006.01)*

(21) Application number: **07106515.5**

(22) Date of filing: **19.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **30.03.2007 EP 07105378**

(71) Applicant: **Honda Research Institute Europe GmbH**
**63073 Offenbach/Main (DE)**

(72) Inventors:
• **Sendhoff, Bernhard, Dr.**
**63486 Bruchköbel (DE)**
• **Steiner, Till**
**64546 Mörfelden (DE)**

(74) Representative: **Rupp, Christian et al**
**Mitscherlich & Partner**
**Patent- und Rechtsanwälte**
**Sonnenstrasse 33**
**80331 München (DE)**

(54) **Design optimization using indirect design coding**

(57) The invention proposes a method for optimizing a material structure,
comprising the steps of:
a.) encoding an initial design of the material structure to be optimized as a parameter set,
b.) subjecting the initial design to an optimization according to at least one preset criterion, using an Evolutionary Algorithm,
c.) terminating the optimization when a stop condition is met, and
d.) outputting data representing the optimized parameter set, wherein the design of the material structure is encoded indirectly as a virtual DNA.

Figure 1

**Description**

The present invention is related to the optimization of designs of physical bodies, such as the internal structure of such bodies.

When applying the method according to the invention, a parameter set representing an optimized design of a physical body is obtained. This optimized parameter set can then be translated into the real world by building an optimized physical body according to a plan based on the optimized parameter set.

The optimization can be carried out using an Evolutionary Algorithm, which is well known as such to the skilled person.

Introduction

Evolutionary algorithms have been successfully used in many areas like e.g. technical optimization, operations research and design optimization. In particular, in the later field, in combination with appropriate simulation tools (like computational fluid dynamics) innovative technical design solutions have been obtained.

At the same time, the complexity of the reachable design is limited, because in most cases (e.g. spline representation) it directly relates to the dimension of the search space. Alternative representations such as free form deformation, allow unrestricted complexity of the shape, however not of the changes of the shape. Besides the limited complexity, it is also difficult to endow shapes and structures with certain properties that might be desirable in some cases like symmetry, self-similarity or properties that reflect constraints of the physical world.

Object of the invention:

The present invention proposes an improved design optimization approach which is particularly suited for the optimization of inner structures of physical bodies.

Summary of the invention:

This object is achieved by means of the features of the independent claims. The dependent claims develop further the central idea of the present invention.

A first aspect of the invention relates to a method for optimizing the internal structure of a body, comprising the steps of:

a.) encoding an initial design of the internal structure to be optimized as a parameter set,
b.) subjecting the parameter set of the initial design to an optimization according to at least one preset criterion, using an Evolutionary Algorithm,
c.) terminating the optimization when a stop condition is met, and
d.) outputting data representing the optimized parameter set,

wherein the design of the internal structure is encoded indirectly as a virtual genotype the parameters of which describe a cell growth development of the phenotype in a gene regulatory network. The virtual genotype thus represents an indirect coding of the internal structure e.g. by means of the interaction behaviour in the gene regulatory network.

The internal structure may comprise voids.

The invention also relates to the production of a real-world body, using the above method together with the additional step of

e.) building the body having the internal structure of the optimized parameter set.

The internal structure can be a 2d cross-section of the body or the three-dimensional internal structure of the body.

The optimization step b.) can comprise the cyclic repetition of the steps of

-    producing offspring of a genotype,
-    cell growth development until a developmental stop criterion is met, where the development is directed by the genotype, leading to the phenotype of the offspring individuals,
-    computing a fitness value of the grown phenotype, and
-    selecting the individuals according to their fitness value and a selection strategy (e.g. highest fitness value), for the subsequent offspring production step.

The step of producing offspring from a parent individual can be at least one of mutation of the genotype, crossover with another individual, gene transposition and gene duplication. The production of offspring thus occurs at the genotype level and not at the phenotype level.

The development stop condition is met e.g. when:

- The cell growth development has reached a pre-set number of discrete steps, and/or
- The cell growth development has converged into a stable structure, i.e. the cell growth development change between two subsequent steps is lower than a pre-set threshold.

The cells may represent the presence of material or holes, respectively, at a defined position.

The cells are allowed to represent different materials, i.e. the material type can be encoded in the genotype of an individual and differentiate in different cells of an individual.

After termination of the cell growth development the phenotype of the internal structure can be smoothened,

wherein cells represent control points of e.g. a higher order spline surface or other smoothing methods.

Thereby the material boundary either to a material of different type or to holes can be represented by the patches from a number of different spline surfaces.

During the cell growth development the cells move according to the forces applied by other cells or the environment.

During the cell growth development the cells may be allowed to interact physically in the form of rigid body interaction.

During the cell growth development cells can be pushed aside when a division occurs, and reach a new stable arrangement afterwards.

The number of parameters of the genotype are allowed to vary during the course of the optimization (adaptive number of parameters).

The parameters of the genotype can define the activity and the action type of a cell during the cell growth development.

The activity can be at least one of divide, die, release TF and/or produce a cell adhesion function.

The activity can be the cell assuming one out of a plurality of different material types allowed for the body to be optimized.

The Evolutionary Algorithm can be a Evolution Strategy.

Further features, advantages and objects of the present invention will become evident for the skilled person when reading the following detailed description of embodiments of the present invention when taken in conjunction with the figures of the enclosed drawings.

Figure 1    shows an illustrative vDNA

Figure 2    shows a Gene Regulatory Network

Figure 3    shows a time series of interactions inside the dynamic GRN.

Figure 4    shows an exemplary development of the fitness as a function of the optimization cycle (generation) number.

Figure 5    shows a flow chart of the method according to the present invention.

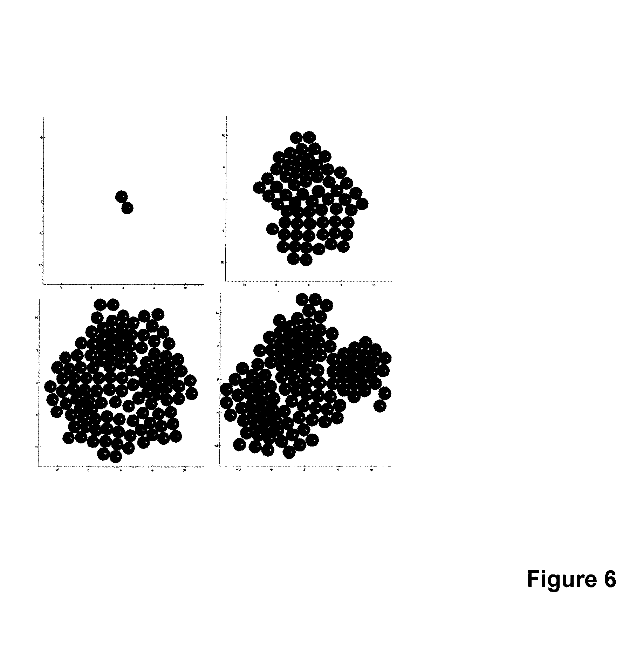

Figure 6    shows different stages of the cell growth development of a phenotype.

<u>General overview of the optimization:</u>

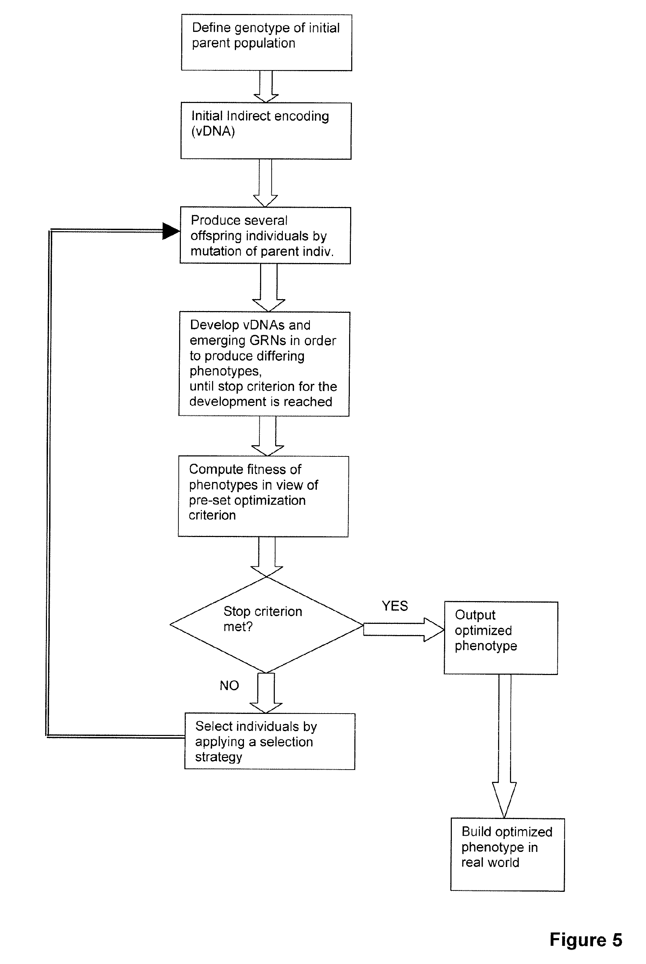

With reference to Fig. 5 a general layout of the method according to the present invention will now be explained.

It is the object of this method to generate data representing the structure of an optimized physical body. "Optimized physical body" is to be understood as a physical body which has been optimized in cyclic iterative steps in view of one or a plurality of (multiple) objectives.

In a first step a population of individuals, each containing a virtual DNA (vDNA) as genotype, is defined. The vDNA is the basis for the gene regulatory network (GRN), which controls the growth process of the individuals. In order to define a GRN, the input and output behaviour of virtual cells has to be defined as well as the interaction mechanisms between the cells.

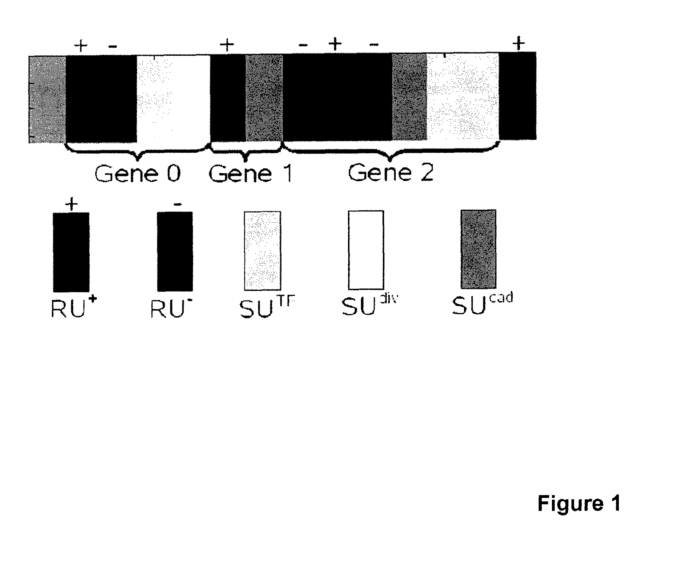

In a second step a population of initial non-optimized designs is indirectly encoded as the vDNA of the individuals. The vDNA comprises a plurality of genes (s. Fig. 1) each consisting e.g. of a plurality of structural subunits (SU) and regulatory subunits (RU). Thus the input and output behaviour, as well as the interaction between cells, is encoded via the genes of the vDNA. This encoding is called "indirect encoding" as thus the parameters (values inside the genes) of the vDNA do not directly encode the shape of an individual (e.g. via the coordinates of splines, the angles of flaps of a wing, etc.), but rather give a construction plan which then is used to grow the shape. The encoding is indirect as, in order to develop the phenotype, a cell with such virtual DNA first has to undergo a cell growth development process in order to produce the phenotype.

The initial genome of the vDNA can e.g. be set up by randomly allocating values to all subunits of the genes of the virtual DNA. An alternative would be to set all values on an average value, or the usage of a hand coded genotype, as well as a genotype that proved useful during previous evolutionary runs.

As it is in principle known from evolutionary algorithms, several offspring individuals are then produced from this initial population of individuals, referred to as parent population. As it is also well known, the several offspring individuals will slightly be different from each other (and from the initial parent individuals) as the offspring production process usually comprises some random influence such as e.g. mutation. This offspring generation will thus have at least two individuals with usually slightly differing virtual DNAs.

Note that in case of the direct encoding (e.g. spline encoding) of known evolutionary algorithms, the direct encoding of the individuals could directly be mapped on phenotype designs, and the fitness of these differing phenotypes could be assessed (computed) by applying a fitness function.

In contrast thereto, in view of the indirect encoding of the present invention, the individuals of the offspring population have to be developed (cell growth development) using a gene regulatory network in order to produce differing phenotypes. The cell growth development will be terminated when a development stop condition is met, e.g. a preset number of developmental steps are reached or it can be terminated when the cell growth development process is stable, i.e. the difference between two subsequent steps is smaller than a preset development change threshold. At the end of the cell growth development step, each individual of the population will have grown a phenotype, which in general differs from the phenotypes of other individuals.

Then, a fitness function (known perse from evolutionary algorithms) can be applied on the differing phenotypes, assessing the fitness in view of at least one preset optimization criterion and outputting a computed fitness value for each of the offspring phenotypes.

In case that in the following step a stop criterion for the optimization cycle has not been reached, individuals of this offspring population are subject to selection. According to their fitness values and a selection strategy, a subset of individuals are chosen to serve as new parent population for subsequent iterations of the optimization loop.

It is important to note that the fitness assessment and correspondingly also the selection is made via an assessment on the phenotypes. On the other hand, the offspring generation (including mutation, etc.) is carried out on the virtual DNA level. This is in contrast to traditional evolutionary algorithms in which genotype and phenotype are directly linked and a change in phenotype yields a directly predictable change in phenotype.

If an optimization stop condition is met after the fitness assessment, the optimization cycle stops. The optimization stop condition can be e.g. a preset maximum number of optimization cycles and/or a convergence criterion, i.e. the fact that the fitness value of the best phenotypes of subsequent optimization cycles do show a difference which is smaller than a preset convergence threshold, or a required fitness is reached.

In case the optimization cycle is terminated, data representing the optimized phenotype and/or the virtual DNA of the optimized phenotype can be output.

These data can then be used as a 2D crossectional or 3D representation of the corresponding physical body which thereafter can be built.

The invention proposes the modelling of cellular development conducted by GRNs for evolutionary shape or structure optimization.

According to the invention the developmental process that uses cells as phenotypic representation is used for design optimization. The genotype of an individual represents a vDNA. The individual is subject to the process of evolution (using an Evolutionary Algorithm) where the genotype (vDNA) describes the developmental process of a growing phenotype rather than its final appearance. Generally, individuals grow in discrete steps (developmental time steps) from one cell to the final shape by using simulated physical and chemical cell-cell interactions, such as simulated transcription factors and simulated adhesion forces between cells.

The Developmental model

The environment

The optimization process starts from the definition of an environment ("virtual egg") that provides the physical environment for the simulation of development. It has the form of a cube (directions $x$, $y$ and $z$) with fixed boundaries. In the beginning of development, the virtual egg contains one single cell that is a ball with a fixed radius placed in the center of the cube. Generally, cell positions are determined by floating point values for $x$, $y$ and $z$ and are in general affected by the forces exerted by other cells, thus cells can move during the developmental process.

The cell

Cells are the entities that represent the phenotype, because cell positions are evaluated for fitness computation. All cells inside one virtual egg contain the same vDNA. Cells have the ability to divide, which means that a new cell is placed close to the initial one. The exact position of the new cell depends on genetic information and the position and forces of other cells.
The cells possess the ability to produce a number of transcription factors that diffuse inside the egg. After apoptosis (genetically induced cell death) the cell is removed from the virtual egg.

The virtual DNA

The virtual DNA is a vector of genes. Each gene consists of a random number of structural unit (SU) and several regulatory units (RU). Whereas structural units provide the information for the cell's actions, regulatory units act as the controlling entities. The activation function of the regulatory units are evaluated in every developmental time step. Specifically depending on the presence of transcription factors, all regulatory units of one gene contribute to its overall activity, i.e., they determine whether a gene is active or inactive at the position where the cell is located.

Transcription factors

Transcription factors are simulated chemicals, that consist of a type *aTF*, a distribution of concentrations that is associated with every point of a diffusion grid d, a diffusion constant D and a decay rate g. The type is used to compute a chemical distance to the regulatory units. Therefore, a transcription factor with a small chemical distance to a regulatory unit has a greater influence on that unit than TFs with larger distances. This ensures that regulatory units will react specifically to certain transcription factors, which is explained in more detail in the following.
Evolutionary optimization a developmental process according to the invention combines evolutionary computation with cell growth development. In this approach, an artificial genotype encodes the developmental process through Gene Regulatory Networks (GRNs) resulting in an indirect representation that is different from traditional evolutionary algorithms (EAs).

<u>The process of development</u>

The model according to the invention is based on

T. Steiner, M. Olhofer, and B. Sendhoff. *Towards shape and structure optimization with evolutionary development.* In Proceedings of the Tenth International Conference on the Simulation and Synthesis of Living Systems, pages 70-76, 2006,

with two major extensions: the implementation of physical interactions between cells and modifications to the genetic representation, so that the model is biologically more plausible.

Genetics

According to the invention, cellular growth is controlled by a genome stored inside a virtual DNA (vDNA), of which an identical copy is available for translation to all cells in an individual.
This genome consists of regulatory subunits (RUs) and structural subunits (SUs), which are initially lined up in a random order. A functional unit of this DNA, called a gene, is composed of a group of SUs and the preceding RUs. The SUs encode actions that a cell should perform, while the RUs determine whether a gene is active or not. The actions encoded in the gene will be performed only if it is active.
An illustrative example of a genome with three genes is given in Fig. 1. This Figure shows a vDNA with three genes, each consisting of one or more structural subunits (SUs) and regulatory subunits (RUs). Two different kinds of RUs exist: inhibitor (RU-) and activator (RU+). A SU coding for the production of a transcription factor (TF) is denoted by SUTF, a SU coding for a division by SUdiv and a Cadherin producing SU by SUcad.
• Structural subunits: A SU encodes the action to be performed, and contains the parameters that specify the action. Possible actions include cell division, production of a diffusing chemical, the transcription factor (TF) for cell-cell signaling, and production of Cadherin molecules on the cell surface, which determine cell-cell adhesion forces.
Formally, a SU consists of a five element vector x with entries $x_i \in [0..1]$, $i = 1....,5$. . $x_1$ is used to determine the type t of action encoded by the SU:

$$t \;=\; \begin{cases} 1 & \forall\, \mathbf{x}: & 0 \leq & x_1 & < \frac{1}{3} \\ 2 & \forall\, \mathbf{x}: & \frac{1}{3} \leq & x_1 & < \frac{2}{3} \\ 3 & \forall\, \mathbf{x}: & \frac{2}{3} \leq & x_1 & < 1 \end{cases}$$

If t = 1, a cell division is encoded. x2 is used to determine the division angle, while the values x3 to x5 remain unused. If t - 2, a TF is to be produced. There, $x_2$ encodes an affinity label assigned to the TF ($aff_{TF}$), $x_3$ the amount of TF to be released, $x_4$ a diffusion constant, and x5 a decay rate. In the case that t = 3, Cadherin molecules are to be produced by the gene, and the type of Cadherin is determined by $X_2$.

Cells containing the same type of Cadherin will adhere to each other. Note that for t 6= 2, not all $x_i$ are used, but still kept as a part of the SU. This means, that mutation affects them, but they are not subject to selection pressure. The reason for keeping them is, that a mutation in x1 can yield t = 2, where five values are needed for the production of the TF. We have not compared this pragmatic approach to other possibilities yet, e.g. to a random re-initialization of x2 to x5 when x1 causes a change in t.

• Regulatory subunits: Two types of RUs are used in the model, which either increase (activate) or decrease (inhibit) the expression of a gene. RUs can sense the presence of certain types of TFs in the vicinity of the cell. If the label of a TF is affine to a label associated with the RU, and if the concentration of the TF lies above a threshold, an activity value is determined for each RU. All activating (= positive sign) and inhibiting (= negative sign) activity values belonging to the same gene are summed up to determine the overall activity of the gene.

Cells and their interaction

The simulation area for cellular growth is defined by a square (2D) or a cube (3D), which is discretized by an equally spaced grid (e.g. step-size 0.5) on which the concentrations of the TFs are allocated. Cells are modelled as spheres with a radius of e.g. one. They interact with each other by reading and releasing TFs and by cellular motion through rigid body interactions coupled with adhesion forces.

No deformations to the spheres are allowed. Instead, a small overlap between neighbouring cells is allowed. Note that cell positions are not fixed to a grid. Therefore, they read the concentrations of TFs from the four nearest nodes of the diffusion grid and interpolate its actual value. The release of a TF by a cell is simulated by an increase of the concentration in the four nearest nodes on the diffusion grid.

The implemented mechanism for cell adhesion is as follows: If two cells contain the same type of Cadherins (which means that they express the same gene), they will adhere to each other.

There are several alternative models available for the simulation of cellular growth and their interaction. E.g. cells can be modelled as pixels on a fixed grid. A springmass-damper system has been proposed to simulate the shape and physical behaviour of plant cells. As mentioned above, different cell models require the evolution of different control mechanisms, resulting in different gene regulatory systems with varying properties.

In the present model a cell can always perform the actions that its genome activates.

In contrast, it may happen in the pixel model that a division does not take place because the space for the new cell is already occupied by another cell. Therefore, the control of activation for such a gene would no longer evolve, since its function is automatically disabled.

Time scales and sequence of events

In the beginning of development, a single cell containing the vDNA is placed at the center of the simulation area. To start the growth process, an initial TF (maternal TF) is released, which maintains a constant concentration in the whole area over the entire developmental time. Contrary to most existing models, the initial TF concentration in our model does not provide any positional information. Rather, it satisfies the minimal requirement for starting a developmental process.

In each developmental step, the following events take place. Firstly, the translation of the DNA is initialised for all existing cells. Secondly, if the TFs in the vicinity of the cell activate a gene, the action that the gene encodes is executed. Finally, the position of all cells is updated and the diffusion of the released chemicals is simulated.

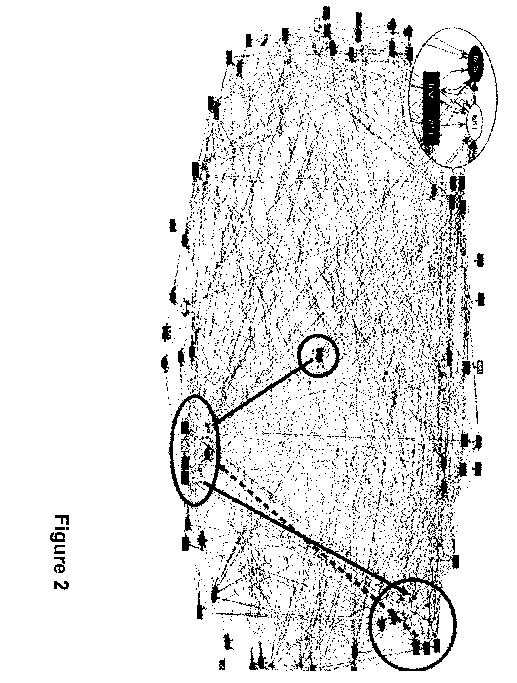

Fig. 2 shows the static interaction network of an individual from generation 43. The prediffused TF is placed in the center of the network. A closeup on one gene is depicted in the upper left corner: The gene consists of an inhibitory RU (black ellipses), an excitatory RU (white ellipses) and two TF-coding Sus (blue rectangles). Two interacting genes and the prediffused TF are emphasized by bold circles.

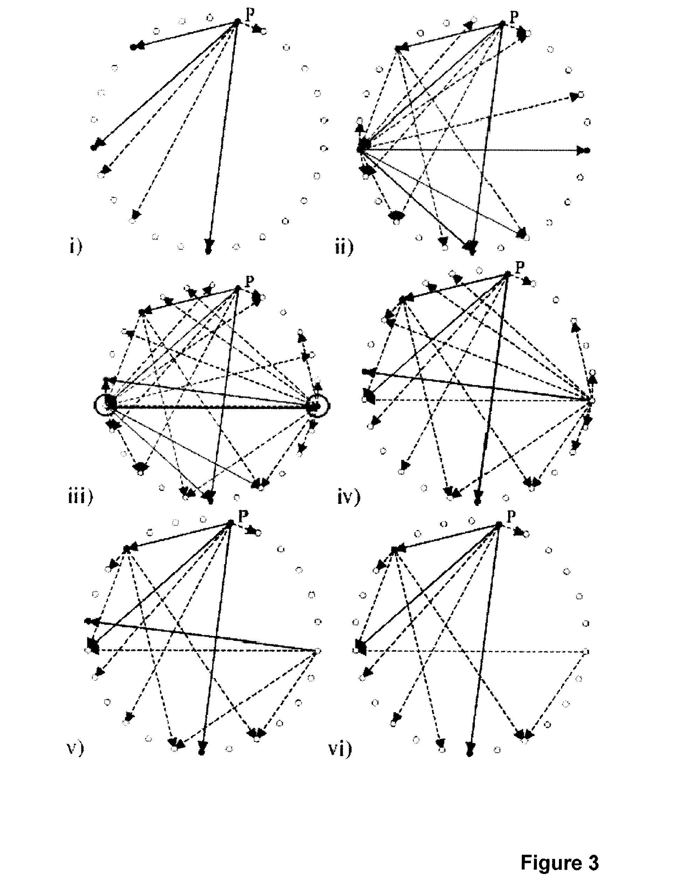

Fig. 3 shows a timeseries of interactions inside the dynamic GRN. Each gene is depicted as a small circle. The red point denotes the prediffused TF. Active genes are marked as filled circles. The interactions between the genes are either inhibitory (red, dashed arrows) or excitatory (blue, solid arrows). In iii) we highlight two genes which form a negative feedback loop, with an excitatory interaction from left to right and an inhibitory interaction in the opposite direction. Each sub-Figure represents the state of the GRN in one timestep. Note that the static condition for this individual is not yet reached after timestep vi).

The evolutionary algorithm

An evolutionary strategy ($(\mu,\lambda)$-ES) with individual strategy parameter adaptation can be adopted. Details thereof can be found in H.-P. Schwefel. Evolution and Optimum Search. John Wiley, 1994.

The main variation operator in the ES is the mutation operator that adds a normally distributed zero-mean random number to each object parameter. Each design variable has its own variance, which self-adapts to the fitness landscape during evolution.

Different to conventional ESs, both gene transposition and gene duplication are implemented. A transposition is achieved in the following way: two randomly chosen units (both SUs and RUs are possible) are marked. Then, all units between these two marked units are cut out and pasted at another randomly chosen position. A gene duplication is performed similarly, only that all units between the markers are copied and pasted at another randomly chosen position. Gene transposition and gene duplication are implemented at a certain probability, which is denoted by pm pt for transposition and pm · pd for duplication respectively where pd = 1 - pt.

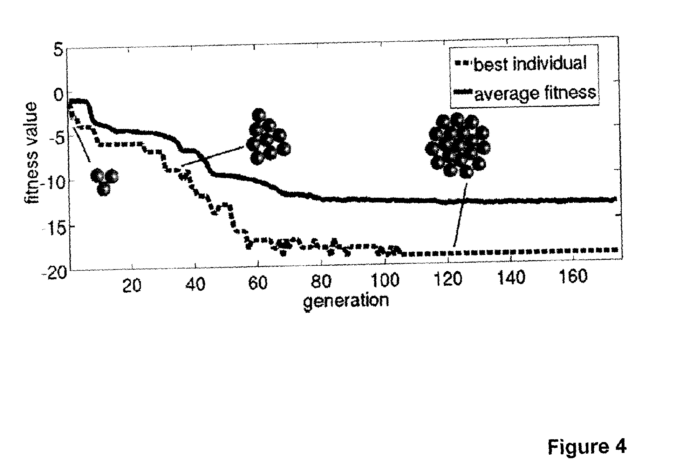

Fig. 4 shows the best (dashed line) and average (solid line) fitness of a typical evolutionary run. The shape of simple individuals, after convergence to a stable state, is shown exemplarily for three different generations.

Applications of the present invention:

Growth Processes for the Optimization of Structured Materials

Structured materials are integrated systems that serve multiple roles, such as structural load bearing, thermal management, energy absorption etc. They exhibit a particular inner structure, which is the main constituent to their superiority over common materials.

This inner structure can be described as specially shaped holes inside a material, which are filled with another material/liquid/gas, according to the intended use of the material. Examples comprise lightweight, load bearing elements, thermal management and materials with integrated damping.

The design of such structured materials consists in optimizing the inner structure according to the needs and given constraints for its function.

The technical problem

The problem is to devise a strategy, which designs the shape and material properties used for the inner structure of functional materials for the uses mentioned above.

1) Designing the number of holes and their shape together, is a high-dimensional mixed integer optimization problem, where the quality function is given by nonlinear physical properties of the resulting design.

2) Testing the real world designs is expensive, therefore a computational approach seems appropriate for parts of the developmental process.

3) The construction of materials, with voids or other materials enclosed, is a complex undertaking. A strategy to produce these structures needs to be included in the design process.

*The approach*

Simulated evolutionary development of internal structured patterns with cellular growth.

Then, real-world bodies can be build using rapid prototyping or extrusion of 2D patterns.

*Examples of application*

*- Lightweight,* yet *stable structures*

Voids inside a material can decrease its weight and lower the material cost. To maintain a desired stability however, the number, position and shape of voids have to be chosen carefully. The evolutionary developmental approach is capable of finding such configurations, optimizing number, position and shape of voids at the same time. Such materials can find their application e.g. in aircraft-, automobile-, high-rise-, and marine-constructions. Furthermore, self-similar patterns of voids and holes that go beyond simple repetitive periodic patterns can be produced.

*- Structures capable of heat transport*

Heat transport in cooling devices is usually achieved by conduction or convection. A heat exchanger is designed in a way that a solid conducts heat from the heat source and transports it to an outer or inner surface (pipe like passages), where a stream of fluid, e.g. air, removes the heat. Size, number and shape of both, the outer and the inner surfaces can be optimized, such that a maximum heat transfer rate is achieved.

*Lightweight structural elements with internal damping*

Suppression of oscillations caused by vibrations is a feature of modern materials that is desired in many industrial areas, since oscillations can cause material and joint fatigue, and annoying auditory effects. Inserting structured damping elements inside the material helps to reduce these oscillations, and therefore reduces its effects, while affecting the stability of the material as little as possible.

*- Micro tubular structure of air diffusers / flow distributors*

In applications, where a flow field with specified characteristics is needed (wind tunnels, chemical reactors) fluids are guided by air diffusers and flow distributors. The layout of such devices usually consists of tubes and nozzles, which are optimized in size, shape and number to produce the desired flow field.

*- Microscopic inner or surface structure of catalysts or membranes, supporting chemical reactions*

In chemistry and biology, catalysis is the acceleration of a chemical reaction by means of a substance, called a catalyst. Both, the chemical characteristics of the used material, as well as its surface structure can improve the performance of the catalyst.

*- Lab- on- a- chip and microfluidic devices such as micropump and microvalve*

devices which require internal microstructure to optimize flow characteristics, fluid pockets, etc.

**Claims**

**1.** A method for optimizing the internal structure of a body, comprising the steps of:

> a.) encoding an initial phenotype design of the internal structure to be optimized as a parameter set,
> b.) subjecting the parameter set of the initial design to an optimization according to at least one pre-set optimization criterion, using an Evolutionary Algorithm,
> c.) terminating the optimization when a stop condition is met, and
> d.) outputting data representing the optimized parameter set,
> wherein the phenotype design of the internal structure is encoded indirectly as a virtual genotype the parameters of which describe a cell growth development of the phenotype using a gene regulatory network.

**2.** The method according to claim 1, comprising the additional step of

> e.) Building the body having the internal structure of the optimized parameter set.

**3.** The method according to claim 1 or 2,
wherein the internal structure is a 2d cross-sectional internal structure of the body or the three-dimensional internal structure of the body.

**4.** The method according to any of the preceding claims,
wherein the optimization step b.) comprises the cyclic repetition of the steps of

- producing offspring of the genotype,
- cell growth development of the phenotypes of the offspring individuals conducted by a gene regulatory network until a development stop criterion is met,
- computing a fitness value of the grown phenotype, and
- selecting the genotype of the phenotype(s) having the best fitness value for the subsequent offspring production step.

**5.** The method according to claim 4,
wherein the step of producing offsprings of the genotype comprises at least one of mutation, recombination, gene transposition and gene duplication.

**6.** The method according to claim 4 or 5,
wherein the development stop criterion is met when:

- The cell growth development has reached a pre-set number of discrete steps, or
- The cell growth development has converged into a stable structure, i.e. the cell growth development change between two subsequent steps is lower than a pre-set threshold.

**7.** The method according to any of claims 4 to 6,
wherein the cells represent the presence of material or holes, respectively, at a defined position.

**8.** The method according to claim 7,
wherein the cells can represent different materials.

**9.** The method according to any of claims 4 to 8,
wherein after the termination of the cell growth development the phenotype of the internal structure is smoothened, wherein the outer cells represent control points of a higher order spline surface.

**10.** The method according to claim 9,
wherein the material boundary either to a material of different type or to holes is represented by the patches from a number of different spline surfaces.

**11.** The method according to any of claims 4 to 10,
wherein during the cell growth development the cells move according to the forces applied by other cells or the environment.

**12.** The method according to any of claims 4 to 11,
wherein during the cell growth development cells interact physically in the form of a rigid body interaction.

**13.** The method according to any of claims 4 to 12,
wherein during the cell growth development cells are pushed aside when a division occurs, and reach a new stable arrangement afterwards.

**14.** The method according to any of the preceding claims,
wherein the number of parameters of the genotype are allowed to vary during the course of the optimization.

**15.** The method according to any of the preceding claims,
wherein the parameters of the genotype define the activity and the action type of a cell during the cell growth development.

**16.** The method according to claim 15,

wherein the activity is at least one of divide, die, release TF and/or produce a cell adhering function.

17. The method according to any of the preceding claims,
    wherein the Evolutionary Algorithm is a Evolution Strategy.

18. A computer program product,
    implementing a method according to any of the preceding claims when run on a computing device.

Figure 1

Figure 2

i)

ii)

iii)

iv)

v)

vi)

**Figure 3**

Figure 4

Define genotype of initial
parent population

↓

Initial Indirect encoding
(vDNA)

↓

Produce several
offspring individuals by
mutation of parent indiv.

↓

Develop vDNAs and
emerging GRNs in order
to produce differing
phenotypes,
until stop criterion for the
development is reached

↓

Compute fitness of
phenotypes in view of
pre-set optimization
criterion

↓

Stop criterion
met?

YES →

Output
optimized
phenotype

NO ↓

Select individuals by
applying a selection
strategy

↓

Build optimized
phenotype in
real world

**Figure 5**

**Figure 6**

European Patent Office

**EUROPEAN SEARCH REPORT**

Application Number

EP 07 10 6515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOILE C ET AL: "Design by morphogenesis" BT TECHNOLOGY JOURNAL BRITISH TELECOMMUNICATIONS PLC UK, vol. 18, no. 4, October 2000 (2000-10), pages 112-121, XP002475305 ISSN: 1358-3948 * the whole document * | 1-18 | INV. G06N3/12 ADD. G06F17/50 |
| D,Y | STEINER T ET AL: "Towards shape and structure optimization with evolutionary development" PROCEEDINGS OF THE TENTH INTERNATIONAL CONFERENCE ON THE SIMULATION AND SYNTHESIS OF LIVING SYSTEMS, XX, XX, 2006, pages 70-76, XP008089131 * the whole document * | 1-18 | |
| Y | BOWERS C P: "Formation of modules in a computational model of embryogeny" THE 2005 IEEE CONGRESS ON EVOLUTIONARY COMPUTATION (IEEE CAT. NO. 05TH8834) IEEE PISCATAWAY, NJ, USA, vol. 1, 2005, pages 537-542 Vol.1, XP010861611 ISBN: 0-7803-9363-5 * the whole document * | 1-18 | TECHNICAL FIELDS SEARCHED (IPC) G06N G06F |
| A | MANOS S ET AL: "Photonic device design using multiobjective evolutionary algorithms" EVOLUTIONARY MULTI-CRITERION OPTIMIZATION. THIRD INTERNATIONAL CONFERENCE, EMO 2005. PROCEEDINGS (LECTURE NOTES IN COMPUTER SCIENCE VOL. 3410) SPRINGER-VERLAG BERLIN, GERMANY, 2005, pages 636-650, XP008089149 ISBN: 3-540-24983-4 * abstract * * paragraph [0003] - paragraph [0004] * | 1-18 | |

-/--

The present search report has been drawn up for all claims

| Place of search | Date of completion of the search | Examiner |
|---|---|---|
| The Hague | 9 April 2008 | Schenkels, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 10 6515

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOHNENBERGER O ET AL: "Automatic design of truss structures using evolutionary algorithms" 1995 IEEE INTERNATIONAL CONFERENCE ON EVOLUTIONARY COMPUTATION (CAT. NO.95TH8099) IEEE NEW YORK, NY, USA, vol. 1, 1995, pages 143-147 vol.1, XP002475306 ISBN: 0-7803-2759-4 * the whole document * ----- | 1-18 | |

TECHNICAL FIELDS
SEARCHED (IPC)

The present search report has been drawn up for all claims

| Place of search | Date of completion of the search | Examiner |
|---|---|---|
| The Hague | 9 April 2008 | Schenkels, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H.-P. SCHWEFEL.** Evolution and Optimum Search. John Wiley, 1994